(19) 

Europäisches
Patentamt
European
Patent Office
Office européen
des brevets

(11) **EP 3 441 966 A1**

(12) **EUROPEAN PATENT APPLICATION**

(43) Date of publication:
**13.02.2019 Bulletin 2019/07**

(21) Application number: **18196817.3**

(22) Date of filing: **09.07.2015**

(51) Int Cl.:
*G10L 19/008* (2013.01)  *H04S 7/00* (2006.01)
*G10L 21/043* (2013.01)  *H04R 5/033* (2006.01)
*G10L 21/0216* (2013.01)  *A63F 13/215* (2014.01)
*A63F 13/54* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2014 US 201462028121 P**

(62) Document number(s) of the earlier application(s) in accordance with Art. 76 EPC:
**15739473.5 / 3 172 730**

(71) Applicant: **PCMS Holdings, Inc.**
**Wilmington, DE 19809 (US)**

(72) Inventor: **Ojala, Pasi Sakari**
**02400 Kirkkonummi (FI)**

(74) Representative: **AWA Sweden AB**
**P.O. Box 5117**
**200 71 Malmö (SE)**

Remarks:
This application was filed on 26-09-2018 as a divisional application to the application mentioned under INID code 62.

(54) **SYSTEM AND METHOD FOR DETERMINING AUDIO CONTEXT IN AUGMENTED-REALITY APPLICATIONS**

(57) An augmented-reality audio system generates information regarding the acoustic environment by sampling audio signals. Using a Gaussian mixture model or other technique, the system identifies the location of one or more audio sources, with each source contributing an audio component to the sampled audio signals. The system determines a reverberation time for the acoustic environment using the audio components. In determining the reverberation time, the system may discard audio components from sources that are determined to be in motion, such as components with an angular velocity above a threshold or components having a Doppler shift above a threshold. The system may also discard audio components from sources having an inter-channel coherence above a threshold. In at least one embodiment, the system renders sounds using the reverberation time at virtual locations that are separated from the locations of the audio sources.

800

```
802 ──▶  SAMPLE AUDIO SIGNAL(S)

804 ──▶  DETERMINE LOCATION(S) OF AUDIO SOURCE(S)
         FROM AUDIO-SIGNAL SAMPLES

806 ──▶  RENDER AUGMENTED-REALITY AUDIO SIGNAL
         AT VIRTUAL LOCATION DIFFERENT FROM
         DETERMINED LOCATION(S)
```

**FIG. 8**

EP 3 441 966 A1

## Description

## CROSS-REFERENCE TO RELATED APPLICATIONS

This application claims priority to and the benefit of U.S. Provisional Patent Application Serial No. 62/028,121, filed July 23, 2014 and entitled "System and Method for Determining Audio Context in Augmented-Reality Applications," the full contents of which are hereby incorporated herein by reference.

## TECHNICAL FIELD

This disclosure relates to audio applications for augmented-reality systems.

## BACKGROUND

When rendering audio content in augmented-reality applications, it is important to have information regarding the prevailing audio-scene context. Augmented-reality content needs to be aligned to the surrounding environment and context to seem natural to the user of the augmented-reality application. For example, when augmenting an artificial audio source within the audio scenery, the content does not sound natural and does not provide natural user experience if the source reverberation is different from that of the audio scenery around the user, or if the content is rendered in the same relative directions as environmental sources. This is especially important in virtual-reality games and entertainment when audio tags are augmented in predetermined locations in the field or relative to the user. To accomplish natural rendering, it is desirable to apply contextual analytics to obtain an accurate estimate of the given audio scenery including providing a reliable reverberation estimate. This is analogous to the desirability of having matching illumination and correct shadows for visual components that are rendered on an augmented-reality screen.

Reverberation estimates are typically conducted by searching for decaying events within audio content. In the best case, an estimator detects an impulse-like sound event, the decaying tail of which reveals the reverberation conditions of the given space. Naturally, the estimator also detects signals that are slowly decaying by nature. In this case, the observed decay rate is a combination of the source-signal decay and the reverberation of the given space. Furthermore, it is typically assumed that the audio scenery is stationary-i.e., that the sound sources are not moving. However, a reverberation-estimation algorithm may detect the moving audio source as a decaying signal source, causing an error in the estimation result.

Reverberation context can be detected only when there are active audio sources present. However, not all audio content is suitable to use for this analysis. Augmented-reality devices and game consoles can apply test signals for conducting the prevailing audio context analysis. However, many wearable devices do not have the capability to emit such a test signal, nor is such a test signal feasible in many situations.

Reverberation of the environment and the room effect is typically estimated with an offline measurement setup. The basic approach is to have an artificial impulse-like sound source and an additional device for recording the impulse response. Reverberation estimation tools may use what is known in the art as maximum likelihood estimation (MLE). The decay rate of the impulse is then applied to calculate the reverberation. This is a fairly reliable approach to determining the prevailing context. However, it is not real-time and cannot be used in augmented-reality services when the location of the user is not known beforehand.

Typically the reverberation estimation and room response of the given environment is conducted using test signals. The game devices or augmented-reality applications output a well-defined acoustic test signal, which could consist of white or pink noise, pseudorandom sequences or impulses, and the like. For example, Microsoft's Kinect device can be configured to scan the room and estimate the room acoustics. In this case, the device or application is simultaneously playing back the test signal and recording the output with one or more microphones. As a result, knowing the input and output signals, the device or application is able to determine the impulse response of the given space.

## OVERVIEW OF DISCLOSED EMBODIMENTS

Disclosed herein are systems and methods for determining audio context in augmented reality applications.

One embodiment takes the form of a method that includes (i) sampling an audio signal from a plurality of microphones; (ii) determining a respective location of at least one audio source from the sampled audio signal; and (iii) rendering an augmented-reality audio signal having a virtual location separated from the at least one determined location by at least a threshold separation.

In at least one such embodiment, the method is carried out by an augmented-reality headset.

In at least one such embodiment, rendering includes applying a head-related transfer function filtering.

In at least one such embodiment, the determined location is an angular position, and the threshold separation is a threshold angular distance; in at least one such embodiment, the threshold angular distance has a value selected from the group consisting of 5 degrees and 10 degrees.

In at least one such embodiment, the at least one audio source includes multiple audio sources, and the virtual location is separated from each of the respective determined locations by at least the threshold separation.

In at least one such embodiment, the method further includes distinguishing among the multiple audio sources based on one or more statistical properties selected from the group consisting of the range of harmonic frequencies, sound level, and coherence.

In at least one such embodiment, each of the multiple audio sources contributes a respective audio component to the sampled audio signal, and the method further includes determining that each of the audio components has a respective coherence level that is above a predetermined coherence-level threshold.

In at least one such embodiment, the method further includes identifying each of the multiple audio sources using a Gaussian mixture model.

In at least one such embodiment, the method further includes identifying each of the multiple audio sources at least in part by determining a probability density function of direction of arrival data.

In at least one such embodiment, the method further includes identifying each of the multiple audio sources at least in part by modeling a probability density function of direction of arrival data as a sum of probability distribution functions of the multiple audio sources.

In at least one such embodiment, the sampled audio signal is not a test signal.

In at least one such embodiment, the location determination is performed using binaural cue coding.

In at least one such embodiment, the location determination is performed by analyzing a sub-band in the frequency domain.

In at least one such embodiment, the location determination is performed using inter-channel time difference.

One embodiment takes the form of an augmented-reality headset that includes (i) a plurality of microphones; (ii) at least one audio-output device; (iii) a processor; and (iv) data storage containing instructions executable by the processor for causing the augmented-reality headset to carry out a set of functions, the set of functions including (a) sampling an audio signal from the plurality of microphones; (b) determining a respective location of at least one audio source from the sampled audio signal; and (c) rendering, via the at least one audio-output device, an augmented-reality audio signal having a virtual location separated from the at least one determined location by at least a threshold separation.

One embodiment takes the form of a method that includes (i) sampling at least one audio signal from a plurality of microphones; (ii) determining a reverberation time based on the sampled at least one audio signal; (iii) modifying an augmented-reality audio signal based at least in part on the determined reverberation time; and (iv) rendering the modified augmented-reality audio signal.

In at least one such embodiment, the method is carried out by an augmented-reality headset.

In at least one such embodiment, modifying the augmented-reality audio signal based at least in part on the determined reverberation time comprises applying to the augmented-reality audio signal a reverberation corresponding to the determined reverberation time.

In at least one such embodiment, modifying the augmented-reality audio signal based at least in part on the determined reverberation time comprises applying to the augmented-reality audio signal a reverberation filter corresponding to the determined reverberation time.

In at least one such embodiment, modifying the augmented-reality audio signal based at least in part on the determined reverberation time comprises slowing down the augmented-reality audio signal by an amount determined based at least in part on the determined reverberation time.

## BRIEF DESCRIPTION OF THE DRAWINGS

FIG. 1 is a schematic illustration of a sound waveform arriving at a two-microphone array.

FIG. 2 is a schematic illustration of sound waveforms experienced by a user.

FIG. 3 is a schematic block diagram illustrating augmentation of sound source as spatial audio for a headset-type of augmented-reality device, where the sound-processing chain includes 3D-rendering HRTF and reverberation filters.

FIG. 4 is a schematic block diagram illustrating an audio-enhancement software module.

FIG. 5 is a flow diagram illustrating steps performed in the context-estimation process.

FIG. 6 is a flow diagram illustrating steps performed during audio augmentation using context information.

FIG. 7 is a block diagram of a wireless transceiver user device that may be used in some embodiments.

FIG. 8 is a flow diagram illustrating a first method, in accordance with at least one embodiment.

FIG. 9 is a flow diagram illustrating a second method, in accordance with at least one embodiment.

**DETAILED DESCRIPTION OF THE DRAWINGS**

Audio context analytics methods can be improved by combining numerous audio scene parameterizations associated with the point of interest. In some embodiments, the direction of arrival of detected audio sources as well as coherence estimation reveal useful information about the environment and is used to provide contextual information. In further embodiments, measurements associated with the movement of the sources may be used to further improve the analysis. In various embodiments described herein, audio context analysis may be performed without use of a test signal by listening to the environment and existing natural sounds.

In one embodiment, audio source direction of arrival estimation is conducted using a microphone array comprising at least two microphones. The output of the array is the summed signal of all microphones. Turning the array and detecting the direction that provides the highest amount of energy of the signal of interest is one method for estimating the direction of arrival. In a further embodiment, electronically steering of the array, i.e. turning the array towards the point of interest may be implemented, instead of physically turning the device, by adjusting the microphone delay lines. For example, the two-microphone array is aligned off the perpendicular axis of the microphones by delaying the other microphone input signal by a certain time delay before summing the signals. The time delay providing the maximum energy of the sum signal of interest together with the distance between the microphones may be used to derive the direction of arrival.

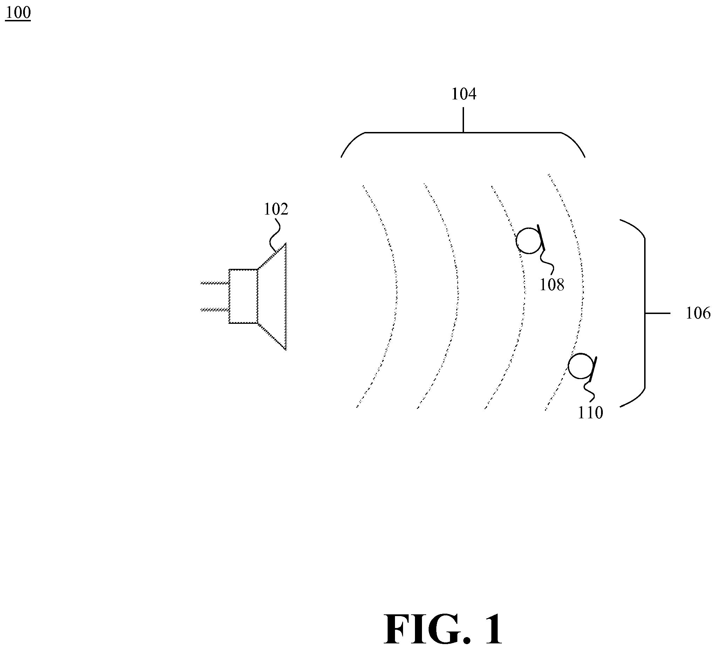

FIG. 1 is a schematic illustration of a sound waveform arriving at a two-microphone array. Indeed, FIG. 1 illustrates a situation 100 in which a microphone array 106 (including microphones 108 and 110) is physically turned slightly off a sound source 102 that is producing sound waves 104. As can be seen, the sound waves 104 arrive later at microphone 110 than they do at microphone 108. Now, to steer the microphone array 106 towards the actual sound source 102, the signal from microphone 110 may be delayed by a time unit corresponding to the difference in distance perpendicular to the sound source 102. The two-microphone array 106 could e.g. be a pair of microphones mounted on an augmented reality headset.

When the distance between the microphones 108 and 110, time delay between the captured microphone signals and the speed of sound is known, determining the direction of arrival of the source is straightforward using trigonometry. In a further embodiment, a method to estimate the direction of arrival comprises detecting the level differences of microphone signals and applying corresponding stereo panning laws.

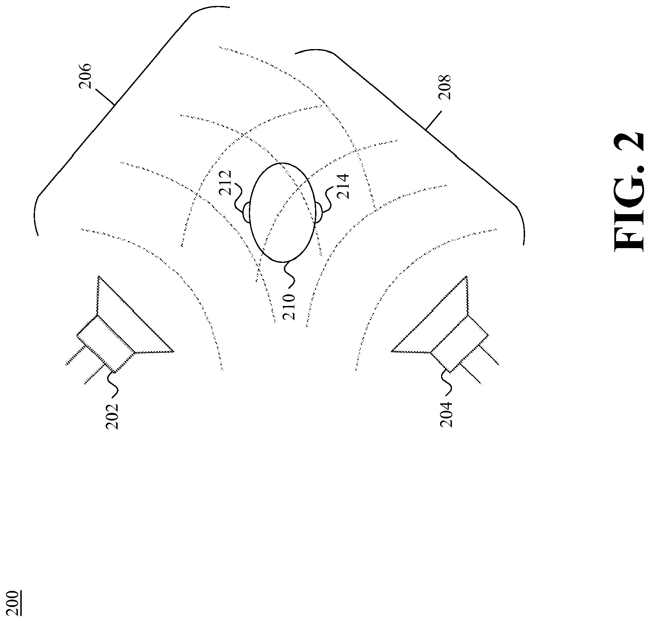

FIG. 2 is a schematic illustration of sound waveforms experienced by a user. Indeed, FIG. 2 illustrates a situation 200 in which a listener 210 (shown from above and having a right ear 212 and a left ear 214) exposed to multiple sound sources 202 (emitting sound waves shown generally at 206) and 204 (emitting sound waves shown generally at 208). In this case, the ear-mounted microphones act as a sensor array that is able to distinguish the sources based on the time and level differences of incoming left and right hand side signals. The sound scene analysis may be conducted in the time-frequency domain by first decomposing the input signal with lapped transforms or filter banks. This enables sub-band processing of the signal.

When the inter-channel time and level difference parameterization of a two channel audio signal is available, the direction of arrival estimation can be conducted for each sub-band by first converting the time difference cue into a reference direction of arrival cue by solving the equation:

$$\tau = \left( |x| \sin(\phi) \right) / c, \qquad\qquad (1)$$

where $|x|$ is the distance between the microphones, c is the speed of sound and $\tau$ is the time difference between the two channels.

Alternatively, the inter-channel level cue can be applied. The direction of arrival cue $\phi$ is determined using for example the traditional panning equation:

$$\sin\phi = \frac{l_1 - l_2}{l_1 + l_2}, \qquad\qquad (2)$$

where $l_i = x_i(n)^T x_i(n)$ of channel $i$.

One method for spatial audio parameterisation is the use of binaural cue coding (BCC), which provides the multi-channel signal decomposition into combined (down-mixed) audio signal and spatial cues describing the spatial image. Typically, the input signal for a BCC parameterization may be two or more audio channels or sources.

The input is first transformed into time-frequency domain using for example Fourier transform or QMF filterbank decomposition. The audio scene is then analysed in the transform domain and the corresponding parameterisation is extracted.

Conventional BCC analysis comprises computation of inter-channel level difference (ILD), time difference (ITD) and inter-channel coherence (ICC) parameters estimated within each transform domain time-frequency slot, i.e. in each frequency band of each input frame. ILD and ITD parameters are determined between each channel pair, whereas ICC is typically determined individually for each input channel. In the case of a binaural audio signal having two channels, the BCC cues may be determined between decomposed left and right channels.

In the following, some details of the BCC approach are illustrated using an example with two input channels available for example in a head mounted stereo microphone array. However, the representation can be easily generalized to cover input signals with more than two channels available in a sensor network.

The inter-channel level difference (ILD) for each sub-band $\Delta L_n$ is typically estimated in the logarithmic domain:

$$\Delta L_n = 10 \log_{10}\left( \frac{s_n^{L\ T} s_n^L}{s_n^{R\ T} s_n^R} \right) \tag{3}$$

where $s_n^L$ and $s_n^R$ are time domain left and right channel signals in sub-band n , respectively. The inter-channel time difference (ITD), i.e. the delay between left and right channel, is

$$\tau_n = \arg\max_d \left\{ \Phi_n(k,d) \right\} \tag{4}$$

where $\Phi_n(k,d)$ is the normalized correlation

$$\Phi_n(k,d) = \frac{s_n^L(k-d_1)^T s_n^R(k-d_2)}{\sqrt{\left(s_n^L(k-d_1)^T s_n^L(k-d_1)\right)\left(s_n^R(k-d_2)^T s_n^R(k-d_2)\right)}} \tag{5}$$

where

$$d_1 = \max\{0, -d\}$$
$$d_2 = \max\{0, d\} \tag{6}$$

The normalized correlation of Equation (5) is the inter-channel coherence (ICC) parameter. It may be utilized for capturing the ambient components that are decorrelated with the "dry" sound components represented by phase and magnitude parameters in Equations (3) and (4).

Alternatively, BCC coefficients may be determined in DFT domain. Using for example windowed Short Time Fourier Transform (STFT), the sub-band signals above are converted to groups of transform coefficients. $S_n^L$ and $S_n^R$ are the spectral coefficient vectors of left and right (binaural) signal for sub-band $n$ of the given analysis frame, respectively. The transform domain ILD may be easily determined according to Equation (3)

$$\Delta L_n = 10 \log_{10}\left( \frac{S_n^{L\ *} S_n^L}{S_n^{R\ *} S_n^R} \right), \tag{7}$$

where * denotes complex conjugate.

However, ITD may be more convenient to handle as inter-channel phase difference (ICPD) of complex domain coefficients according to

$$\varphi_n = \angle\left( S_n^{L\ *} S_n^R \right). \tag{8}$$

ICC may be computed in frequency domain using a computation quite similar to the one used in the time domain calculation in Equation (5):

$$\Phi_n = \frac{S_n^L{}^* S_n^R}{\sqrt{\left(S_n^L{}^* S_n^L\right)\left(S_n^R{}^* S_n^R\right)}} \qquad (9)$$

The level and time/phase difference cues represent the dry surround sound components, i.e. they can be considered to model the sound source locations in space. Basically, ILD and ITD cues represent surround sound panning coefficients.

The coherence cue, on the other hand, is supposed to cover the relation between coherent and decorrelated sounds. That is, ICC represents the ambience of the environment. It relates directly to the correlation of input channels, and hence, gives a good indication about the environment around the listener. Therefore, the level of late reverberation of the sound sources e.g. due to the room effect, and the ambient sound distributed between the input channels may have a significant contribution to the spatial audio context for example on reverberation of the given space.

The direction of arrival estimation above has been given for the detection of a single audio source. However, the same parameterisation could be used for multiple sources as well. Statistical analysis of the cues can be used to reveal that the audio scene may contain one or more sources. For example, the spatial audio cues could be clustered in arbitrary number of subsets using Gaussian Mixture Models (GMM) approach.

The achieved direction of arrival cues can be classified within **M** Gaussian mixtures by determining the probability density function (PDF) of the direction of arrival data

$$f_{X|\theta}\left(\phi|\theta\right) = \sum_{i=1}^{M} \rho_i f_{X|\theta_i}\left(\phi|\theta_i\right), \qquad (10)$$

where $\rho_i$ is the component weight and components are Gaussian

$$f_{X|\theta_i}\left(\phi|\theta_i\right) = \frac{1}{\sigma_i \sqrt{2\pi}} e^{-(\phi - \mu_i)^2/2\sigma_i^2}, \qquad (11)$$

with mean $\mu_i$, variance $\sigma^2$ and direction of arrival cue $\phi$.

For example, an expectation-maximisation (EM) algorithm could be used for estimation of the component weight, mean and variance parameters for each mixture in an iterative manner using the achieved data set. For this particular case, the system may be configured to determine the mean parameter for each Gaussian mixture since it gives the estimate of the direction of arrival of plurality of sound sources. Because the number of mixtures provided by the algorithm is most likely greater than the actual number of sound sources within the image, it may be beneficial to concentrate on the parameters having the greatest component weight and lowest variance since they indicate strong point-like sound sources. Mixtures having mean values close to each other could also be combined. For example, sources closer than 10-15 degrees could be combined as a single source.

Source motion can be traced by observing the mean $\mu_i$ corresponding to the set of greatest component weights. Introduction of new sound sources can be determined when a new component weight (with a component mean parameter different from any previous parameter) exceeds a predetermined threshold. Similarly, when a component weight of a tracked sound source falls below a threshold, the source is most likely silent or has disappeared from the spatial audio image.

Detecting the number of sound sources and their position relative to the user is important when rendering the augmented audio content. Additional information sources must not be placed in 3D space on top of or close to an existing sound source.

Some embodiments may maintain a record of detected locations to keep track of sound sources as well as the number of sources. For example, when recording a conversation the speakers tend to take turns. That is, the estimation algorithm may be configured to remember the location of the previous speaker. One possibility is to label the sources based on the statistical properties such as range of the harmonic frequencies, sound level, coherence etc.

A convenient approach for estimating the reverberation time in the given audio scene is to first construct a model for a signal decay representing the reverberant tail. When a sound source is switching off, the signal persists for a certain period of time that corresponds to the reverberation time. The reverberant tail may contain several reflections due to multiple scattering. Typically, the tail persists from tenths of a second to several seconds depending on acoustical properties of the given space.

Reverberation time refers to a time during which the sound that was switched off decays by a desired amount. In some embodiments, 60 dB may be used. Other values may also be used, depending on the environment and desired application. It should be noted, that in most cases, a continuous signal does not contain any complete event dropping by 60 dB. Only in scenarios where the user is, for example, clapping hands or otherwise artificially creating impulse-like sound events while recording the audio scenery, can a clean 60 dB decaying signal can be observed. Therefore, the estimation algorithm may be configured to identify the model parameters using signals with lower levels. In this case, even 20 dB decay is sufficient for finding the decaying signal model parameters.

The simple model for decaying signal includes a decaying factor $a$ so that the signal model for the decaying tail is written as

$$y(n) = a(n)^n x(n), \tag{12}$$

in which $x(n)$ is the sound source signal and $y(n)$ the detected signal of the reverberation effect in the given space. The decaying factor values (for the decaying signal) are calculated as $a(n) = e^{\left(-1/\tau(n)\right)}$ where the decay time constant is ranging $\tau(n) = [0 \dots \infty)$ resulting in one-to-one mapping $a(n) = [0 \dots 1)$. The actual reverberation time (RT), is related in some embodiments to the time constant by $RT = 6.91\tau$. That is, $RT$ defines the time in which the sound decays by 60 dB, i.e. becomes inaudible for human listener. It is determined as $20\log_{10}(e^{-RT/\tau}) = -60$.

An efficient method for estimating the model parameter of Equation (12) is a maximum likelihood estimation (MLE) algorithm performed with overlapping $N$ sample windows. The window size may be selected to prevent the estimation from failing if the decaying reverberant tail does not fit to the window and a non-decaying part is accidentally included.

It can be assumed that due to the time varying nature of decaying factor $a(n)$ the detected samples $y(n)$ are independent with a probability distribution $\mathcal{N}(0, \sigma a^n)$. Hence, the joint probability density function for a sequence observations $n = 0, \dots, N - 1$, where $N$ is considered as analysis window length, is written as

$$P(y; a, \sigma) = \frac{1}{a(0) \cdots a(N-1)} \left( \frac{1}{2\pi\sigma^2} \right)^{\frac{N}{2}} \exp\left( -\frac{\sum_{n=0}^{N-1}(y(n)/a(n))^2}{2\sigma^2} \right) \tag{13}$$

The time dependent decay factor $a(n)$ in Equation (13) can be considered as a constant within the analysis window. Hence, the joint probability function can be written as

$$P(y; a, \sigma) = \left( \frac{1}{2\pi a^{(N-1)}\sigma^2} \right)^{\frac{N}{2}} \exp\left( -\frac{\sum_{n=0}^{N-1} a^{-2n} y^2(n)}{2\sigma^2} \right) \tag{14}$$

The likelihood function of Equation (14) is solely defined by the decaying factor $a$ and variance $\sigma$. Taking the logarithm of Equation (14) a log-likelihood function is achieved.

$$L(y; a, \sigma) = -\frac{N(N-1)}{2}\ln(a) - \frac{N}{2}\ln(2\pi\sigma^2) - \frac{1}{2\sigma^2}\sum_{n=0}^{N-1} na^{-2n} y^2(n) \tag{15}$$

The partial derivatives of factor $a$ and variance $\sigma$ are

$$\frac{\partial L(y; a, \sigma)}{a} = -\frac{N(N-1)}{2a} + \frac{1}{2\sigma^2}\sum_{n=0}^{N-1} na^{-2n} y^2(n) \tag{16}$$

$$\frac{\partial L(y; a, \sigma)}{\sigma} = -\frac{N}{\sigma} + \frac{1}{\sigma^3} \sum_{n=0}^{N-1} a^{-2n} y^2(n) \tag{17}$$

The maximum of the log-likelihood function in Equation (15) is achieved when the partial derivatives are zero. Hence, an equation pair is obtained as follows

$$-\frac{N(N-1)}{2a} + \frac{1}{2\sigma^2} \sum_{n=0}^{N-1} n a^{-2n} y^2(n) = 0 \tag{18}$$

$$\frac{1}{N} \sum_{n=0}^{N-1} a^{-2n} y^2(n) = \sigma^2 \tag{19}$$

When the decay factor $a$ is known, the variance can be solved for the given data set using the Equation (19). However, equation (18) can only be solved iteratively. The solution is to substitute Equation (19) into the log-likelihood function in Equation (15) and simply find the decaying factor that maximizes the likelihood.

$$L(y; a_i) = -\frac{N(N-1)}{2} \ln(a_i) - \frac{N}{2} \ln(\frac{2\pi}{N} \sum_{n=0}^{N-1} a_i^{-2n} y^2(n)) - \frac{N}{2} \tag{20}$$

An estimate for the decaying factor may be found by selecting

$$a = \arg\max\{L(y; \hat{a}_i)\} \tag{21}$$

The decaying factor candidates $\hat{a}_i$ can be a quantized set of parameters. For example, we can define a set of $Q$ reverberation time candidates for example in the range of $RT_i = 0.1, ..., 5$ seconds and determine the decay factor set as $\hat{a}_i = \exp(-1 / \frac{RT_i}{6.91 fs})$, where $i = 0, ..., Q - 1$ and $fs$ is the sampling frequency.

The maximum likelihood estimate algorithm described above could be performed with overlapping $N$ sample windows. The window size may be selected such that the decaying reverberant tail fits to the window thereby preventing a non-decaying part from accidentally being included.

Some embodiments may be configured to collect decaying maximum likelihood estimates $\hat{a}_i$ for a predetermined time period $i = 0, ..., T$. The estimated set could be represented as a histogram. A simple approach would be to pick the estimate that has the lowest decaying factor $a = \min\{\hat{a}_i\}$, since it is logical to assume that any sound source would not decay faster than the actual reverberation within the given space. However, the audio signal may contain components that decay faster than the actual reverberation time. Therefore, one solution is to instead pick the estimate corresponding to the first dominant peak in the histogram.

It may happen that some of the estimates within the collected set of estimates $\hat{a}_i$ of $i = 0, ..., T$ are determined for non-reverberant decaying tail including an active signal instead of multi-path scattering. Therefore, according to embodiments described herein, the estimation set can be improved using information about the prevailing audio context.

**Context Estimate Refinement**

As the reverberation time estimation is a continuous process and produces an estimate in every analysis window, it happens that some of the estimates are determined for non-reverberant decaying tail including an active signal, silence, moving sources and coherent content. The real-time analysis algorithm applying overlapping windows produces reverberation estimates although the content does not have any reverberant components. That is, the estimates collected for the histogram-based selection algorithm may be misleading. Therefore, the estimation may be enhanced using information about the prevailing audio context.

The reverberation context of the sound environment is typically fairly stable. That is, due to physical reasons, the reverberation of the environment around the user does not change suddenly. Therefore, the analysis can be conducted applying a number of reverberation estimates gained from overlapping windows over a fairly long time period. Some embodiments may buffer the estimates for several seconds since the analysis is trying to pinpoint a decaying tail in the recorded audio content that will provide the most reliable estimate. Most of the audio content is active sound or silence without decaying tails. Therefore, some embodiments may discard most of the estimates.

According to one embodiment, the reverberation time estimates are refined by taking into account, for example, the input signal inter-channel coherence. The reverberation estimation algorithm monitors continually or periodically the inter-channel cue parameters of the audio image estimation. Even if the MLE algorithm provides a meaningful result, and a decaying signal event is detected, a high ICC parameter estimate may indicate that the given signal event is direct sound from a point-like source and cannot be a reverberant tail containing multiple scatterings of the sound.

When only single channel audio is available, the coherence estimate can be conducted using conventional correlation methods by finding the maximum autocorrelation of the input signal. For example, an ICC or normalized correlation value above 0.6 indicates a highly correlated and periodic signal. Hence, reverberation time estimates corresponding to ICC (or autocorrelation) above a predetermined threshold can be safely discarded.

In addition, in some embodiments the reverberation estimates may be discarded from the histogram-based analysis when the results from consecutive overlapping analysis windows contain one or more relatively large values. The MLE estimate calculated from active non-decaying signal is infinite. Therefore, for example a reverberation of 10 seconds is not meaningful. In this case the analysis window may be considered non-reverberant and the reverberation estimates of the environment are not updated.

Reverberant decaying tails caused by multiple scatterings could be caused by a point-like sound source, but the tail itself is ambient without clear direction of arrival cue. Therefore, the Gaussian mixtures of the detected sources are spreading in case of the reverberant tail. That is, a reliable estimate is achieved when the MLE estimate of the decaying cue is detected and the variances $\sigma^2$ of Gaussian mixtures are increasing.

According to this embodiment, the detection of moving sound sources is applied as a selection criterion. A moving sound may cause a decaying sound level tail when fading away from the observed audio image. For example, a passing car creates a long decaying sound effect that may be mistaken as a reverberant tail. The fading sound may fit nicely into the MLE estimation and eventually produce a large peak in the histogram of all buffered estimates. Therefore, according to this embodiment, when a source moving faster than a predetermined angular velocity (first differential of the direction of arrival estimate of a tracked source) is above a predetermined threshold, the corresponding reverberation time estimates are not updated and buffered for the histogram based analysis.

Moving sounds can also be identified with the Doppler effect. The frequency components of a known sound source is shifted to higher or lower frequencies depending whether the source is moving towards the listener or away from the listener, respectively. Frequency shift also reveals a passing sound source.

**Applying the Context**

Another aspect of some embodiments of this disclosure is the utilization of the sound source location and reverberation estimates in the observed audio environment. The augmented reality concept with artificially added audio components may be improved by using the knowledge of the user's audio environment. For example, a headset-based media rendering and augmented reality device, such as a Google Glass type of headset, may have the microphones placed in earphones or a microphone array in the headset frame. Hence, the device may conduct the auditory context analysis described in the first embodiment. The device may analyse the audio image, determine the reverberation condition and refine the parameterization. When the device is context aware, the augmented content may be processed through a 3D localization scheme and a reverberation generation filter. This ensures that the augmented content sounds natural and it is experienced as natural sound belonging to the environment.

Typically the augmented sound is rendered in a certain predetermined direction relative to the user and environment. In this case, the existing sources in the environment are taken into account to avoid multiple sources in the same direction. This is done for example using Head Related Transfer Function (HRTF) filtering. When the desired location of the augmented source is known, the HRTF filter set corresponding to the direction of arrival is selected. When more than one source is augmented, each individual source signal is rendered separately with the HRTF set corresponding to the desired direction. Alternatively, the rendering could be done in sub-bands, and the dominant source, i.e. the loudest component, of each sub-band and time window is filtered with time-frequency component of corresponding HRTF filter pair.

Having knowledge about the existing sound sources within the natural audio image around the user, the augmentation may avoid the same locations. When a coherent, i.e. when the normalized coherence cue is greater than for example 0.5, and a stationary sound source is detected within the image, the augmented source may be positioned or gracefully moved within a predetermined distance. For example, 5 to 10 degree clearance in the horizontal plane is beneficial for intelligibility and separation of sources. However, in case the source is non-coherent, i.e. scattered sound and moving within the image, there may not be any need to refine the location of the augmented sound. Furthermore, in some applications it may be beneficial to cancel existing natural sound sources with an augmented source rendered in the same location.

On the other hand, when the audio augmentation application is about to cancel one or more of the natural sound sources within the audio image around the user, accurate estimates of the location, reverberation and coherence of the source may be desired.

The HRTF filter parameters are selected based on desired directions of the augmented sound. And finally a reverb generation is required with the contextual parameters achieved with this invention. There are several efficient methods to implement the artificial reverb.

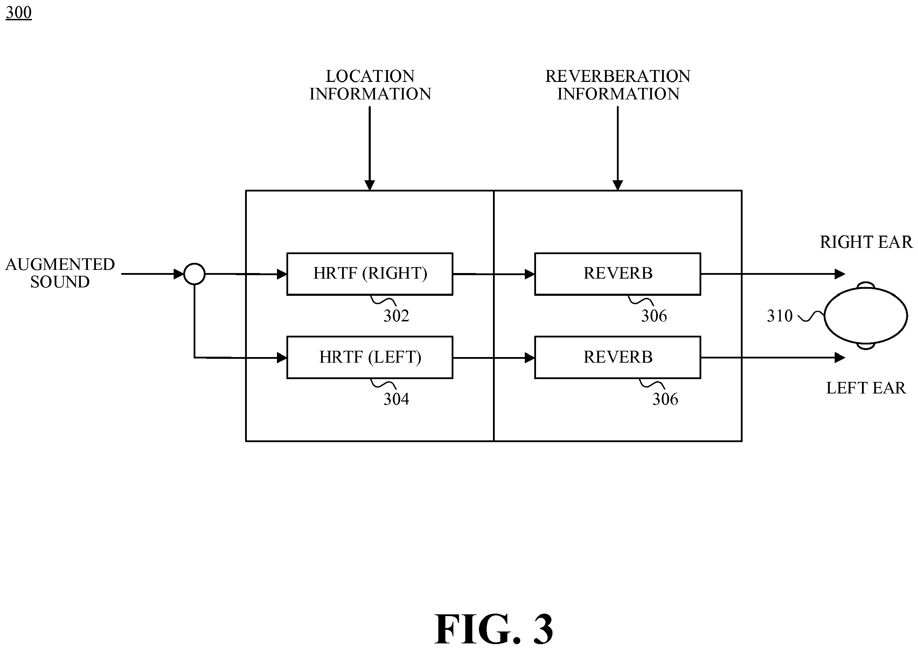

FIG. 3 is a schematic block diagram illustrating augmentation of sound source as spatial audio for a headset-type of augmented-reality device, where the sound-processing chain includes 3D-rendering HRTF and reverberation filters. Indeed, as shown, in the depiction 300, the augmented sound is passed through right-side and left-side HRTF filters 302 and 304, respectively, which also take as inputs location information, and then passed through right-side and left-side reverberation filters 306 and 308, respectively, which also take as inputs reverberation information in accordance with the present methods and systems. The output is then played respectively to the right and left ears of the depicted example user 310.

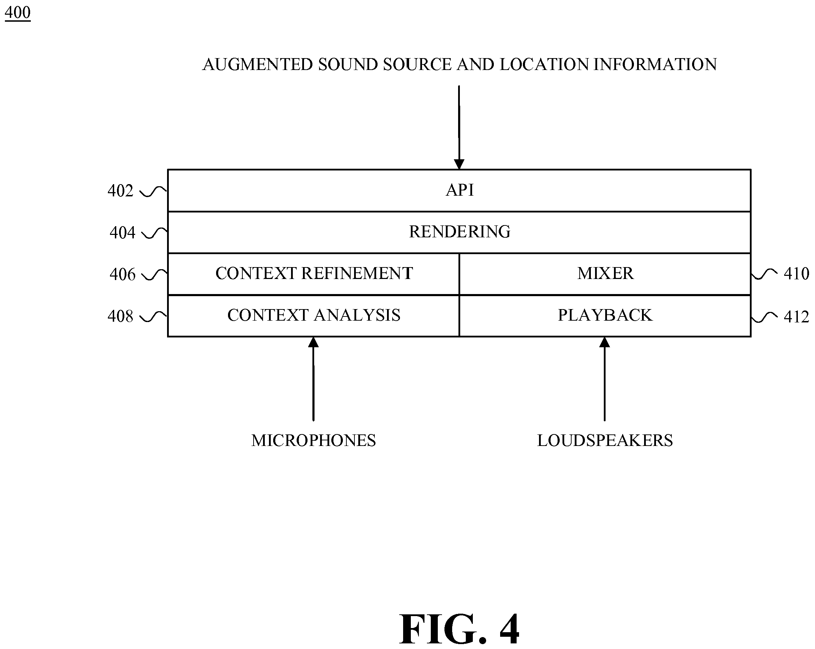

FIG. 4 is a schematic block diagram illustrating an audio-enhancement software module 400. The module 400 includes a sub-module 408 for carrying out context analysis related to data gathered from microphones. The module 400 further includes a sub-module 406 that performs context refinement and interfaces between the sub-module 408 and a sub-module 404, which handles the rendering of the augmented-reality audio signals as described herein. The sub-module 404 interfaces between (a) an API 402 (described below) and (b)(1) the context-refinement sub-module 406 and a mixer sub-module 410. The mixer sub-module 410 interfaces between the rendering sub-module 410 and a playback sub-module 412, which provides audio output to loudspeakers.

Furthermore, the context estimation could be applied for example for user indoor/outdoor classification. Reverberation in outdoor open spaces is typically zero since there are no scatterings and reflecting surfaces. An exception could be location between high-rise buildings on narrow streets. Hence, knowing that the user is outdoors does not ensure that reverberation cues are not needed in context analysis and audio augmentation.

The various embodiments described herein relate to multi-source sensor signal capture in multi microphone and spatial audio capture, temporal and spatial audio scene estimation and context extraction applying audio parameterization. The methods described herein can be applied to ad-hoc sensor networks, real-time augmented reality services, devices and audio based user interfaces.

Various embodiments provide a method for audio context estimation using binaural, stereo and multi-channel audio signals. The real-time estimation of the audio scene is conducted by estimating sound source locations, inter-channel coherence, discrete audio source motions and reverberation. The coherence cue may be used to distinguish reverberant tail of an audio event from a naturally decaying coherent and "dry" signal not affected by a reverberation. In addition, moving sound sources are excluded from the reverberation time estimation due to possible sound level fading effect caused by a sound source moving away from the observer. Having the capability to analyze spatial audio cues improves the overall context analysis reliability.

The knowledge of overall auditory context around the user is useful for augmented reality concepts such as real time guidance and info services and for example pervasive games. The methods and devices described herein provide means for environment analysis regarding the reverberation, number of existing sound sources and their relative motion.

Contextual audio environment estimation in some embodiments starts with parameterization of the audio image around the user, which may include:

- Estimate the number of sound sources and the corresponding direction of arrival as well as track the sound source motion preferably in sub-band domain using direction of arrival estimation;
- Determine the sound source ambience using inter-channel coherence in case of more than one input channels are recorded and autocorrelation of mono recordings;
- Construct a decaying signal model with e.g. maximum likelihood estimation function in overlapping windows over each individual channel enabling continuous and real-time context analysis;
- Determine the number of sources within the range using e.g. Gaussian mixture modelling; and
- Determine moving sources by checking the motion of Gaussian mixture.

The parameterization may then be refined in some embodiments by using one or more of the following contextual knowledge and/or combining different modalities:

- Refine the reverb estimates by discarding estimates that are too high corresponding to infinite decay time, or correspond to highly coherent signal, point like source or fast moving sources;
- Update the reverberation cue only when the contextual analysis guarantees proper conditions;

- Apply the sound source location and reverberation estimate in augmented content rendering; and
- Move augmented sources next to the existing natural sources with a certain clearance when the natural source is coherent and stationary according to the context estimation.

The audio context analysis methods of this disclosure may be implemented in augmented reality devices or mobile phone audio enhancement modules. The algorithms described herein will handle the processing of the one or more microphone signals, context analysis 408 of the input and the rendering 404 of augmented content.

The audio enhancement layer of this disclosure may include input connections for a plurality of microphones. The system may further contain an API 402 for the application developer and service provider to input augmented audio components and meta information about the desired locations.

The enhancement layer conducts audio context analysis of the natural audio environment captured with microphones. This information is applied when the augmented content provided for example by the service provider or game application is rendered to the audio output.

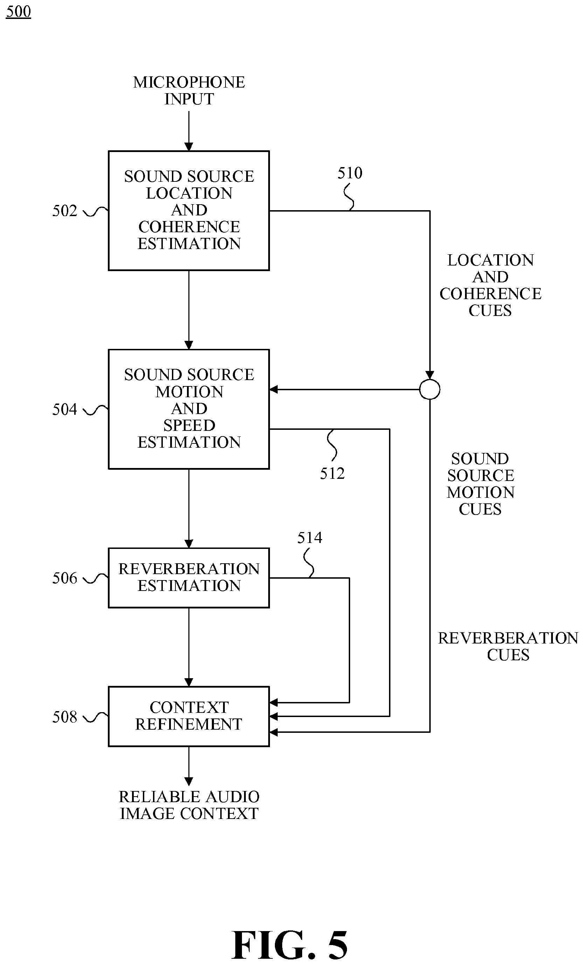

FIG. 5 is a flow diagram illustrating steps performed in the context-estimation process. Indeed, FIG. 5 depicts a context analysis process 500 in detail according to some embodiments. First, the audio signals from two or more microphones are forwarded to sound source and coherence estimation tool in module 502. The corresponding cues are extracted to signal 510 for context refinement and for assisting the possible augmented audio source processing phase. The sound source motion estimation is conducted with the help of estimated location information in module 504. The output is the number of existing sources and their motion information in signal 512. The captured audio is forwarded further to reverberation estimation in module 506. The reverberation estimates are in signal 514. Finally, the context information is refined using all the estimated cues 510, 512, and 514 in module 508. The reverberation estimation is refined taking into account the location, coherence and motion information.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

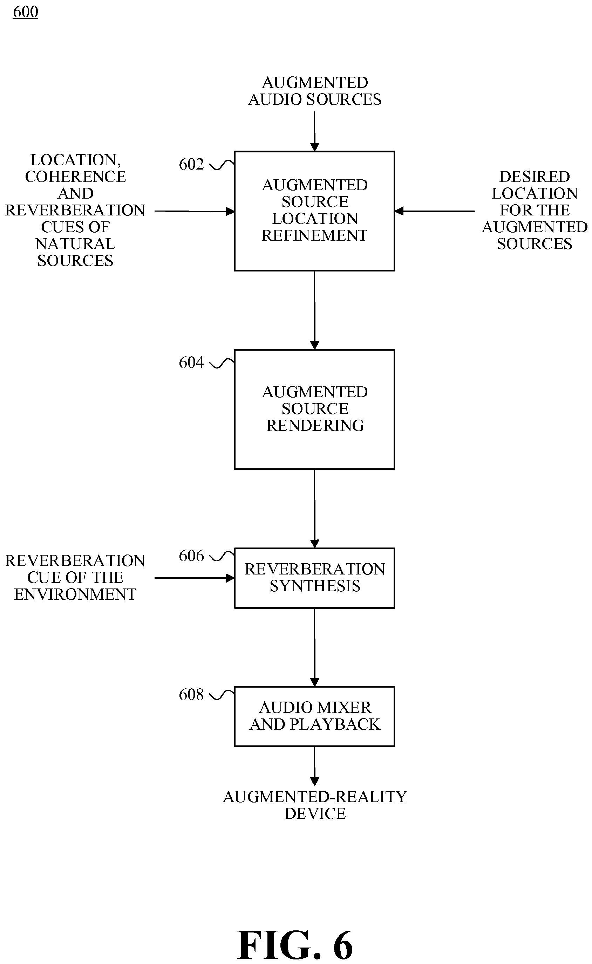

FIG. 6 is a flow diagram illustrating steps performed during audio augmentation using context information. Indeed, FIG. 6 depicts an augmented audio source process 600 of some embodiments using the contextual information of the given space. First, the designed locations of the augmented sources are refined taking into account the estimated locations of the natural sources within the given space. When the augmented source is designed to be in the same location or direction as a coherent, point-like natural source, the augmented source is moved away by a predefined number of degrees in module 602. This helps the user to separate the sources, and the intelligibility of the content is improved. Especially when both augmented and natural sources contain speech in, for example, a teleconference type of application scenario. However, when the natural sound is non-coherent, e.g. the average normalized coherence cue value is below a threshold, such as e.g., 0.5, the augmented source is not moved even though it may locate in the same direction. HRTF processing may be applied to render the content in desired locations in module 604. The estimated reverberation cue is applied to all augmented content for generating natural sounding audio experience in module 606. Finally, all the augmented sources are mixed together in module 608 and played back in the augmented reality device.

Some embodiments of the systems and methods of audio context estimation described in the present disclosure may provide one or more of several different advantages:

- Discarding the most obviously wrong context estimates with the knowledge about the overall conditions in the auditory environment making the context algorithm reliable;
- Sound source location cues, coherence knowledge and reverberation estimate of the environment enables natural rendering of audio content in augmented reality applications;
- Ease of implementation, since wearable augmented reality devices already have means for rendering 3D audio with earpieces or headphones connected, for example, to glasses. The microphones to capture the audio content may be placed in a mobile phone or preferably to a head set frame as a microphone array or stereo/binaural recording with microphones mounted close to or in the user's ear canals.
- Even game consoles with microphone arrays and non-portable augmented reality equipment with fixed setup benefit since the context of the given space can be estimated without designing any specific test procedure or test setup. The audio processing chain may conduct the analysis in background.

Some embodiments of the systems and methods of augmented audio described in the present disclosure may provide one or more of several different advantages:

- The contextual estimation is conducted by capturing and detecting natural sound sources in the environment around the user and the augmented reality device. There is no need to conduct analysis using artificially generated and emitted beacons or test signals for detecting for example the room acoustic response and reverberation. This is beneficial since an added signal may disturb the service experience and annoy the user. Most importantly, wearable devises applied for augmented reality solutions may not even have means to output test signals. The methods described in this disclosure may include actively listening to the environment and making a reliable estimate without disturbing the environment.

- Some methods may be especially beneficial for use with wearable augmented reality devices and services that are not connected to any predefined or fixed location. The user may move around in different locations having different audio environments. Therefore, to be able to render the augmented content according to the prevailing conditions around the user, the wearable device may conduct continuous estimations of the context.

Testing the application functionality in an audio enhancement software layer in mobile device or wearable augmented reality device is straightforward. The contextual cue refinement method of this disclosure is tested by running the content augmentation service in controlled audio environments such as a low-reverberating listening room or echoless chamber. In the test setup the service API is fed with augmented audio content and the actual rendered content in the device loudspeakers or earpieces is recorded.

- The test begins when an artificially created reverbing sound is played back in the test room. The characteristics of the rendered sound created by the augmented reality device or service is then compared with the original augmented content. If the rendered sound has a reverbing effect, the reverb estimation tool of the audio enhancement layer software is verified.

- Next, the artificial sound in the listening room without reverbing effect is moved around to create a decaying sound effect and possibly a Doppler effect. Now, when comparing the augmented source and the output of the rendered content does not have any reverberant effect, the context refinement tool of the audio software is verified.

- Finally, the artificial sound source in the room is placed in the same relative position to the desired position of the augmented source. The artificial sound is played back as point-like coherent source as well as containing reverberation to lower the coherence. When the audio software moves the augmented source away from the coherent natural sound and keeps the location when the natural sound is non-coherent, the tools is verified.

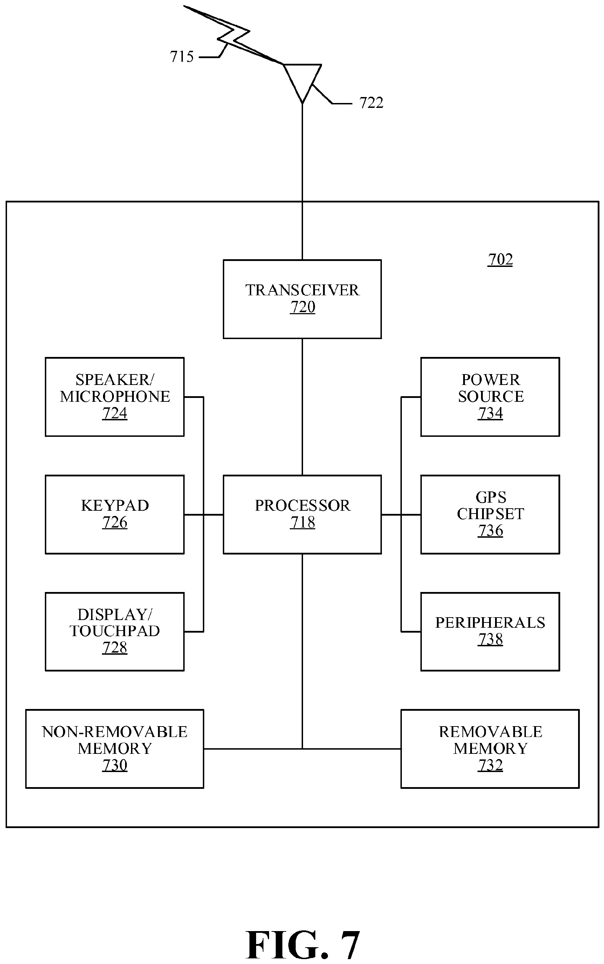

FIG. 7 is a block diagram of a wireless transceiver user device that may be used in some embodiments. In some embodiments, the systems and methods described herein may be implemented in a wireless transmit receive unit (WTRU), such as WTRU 702 illustrated in Fig. 7. In some embodiments, the components of WTRU 702 may be implemented in an augmented-reality headset. As shown in FIG. 7, the WTRU 702 may include a processor 718, a transceiver 720, a transmit/receive element 722, audio transducers 724 (preferably including at least two microphones and at least two speakers, which may be earphones), a keypad 726, a display/touchpad 728, a non-removable memory 730, a removable memory 732, a power source 734, a global positioning system (GPS) chipset 736, and other peripherals 738. It will be appreciated that the WTRU 702 may include any sub-combination of the foregoing elements while remaining consistent with an embodiment. The WTRU may communicate with nodes such as, but not limited to, a base transceiver station (BTS), a Node-B, a site controller, an access point (AP), a home node-B, an evolved node-B (eNodeB), a home evolved node-B (HeNB), a home evolved node-B gateway, and proxy nodes, among others.

The processor 718 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 718 may perform signal coding, data processing, power control, input/output processing, and/or any other functionality that enables the WTRU 702 to operate in a wireless environment. The processor 718 may be coupled to the transceiver 720, which may be coupled to the transmit/receive element 722. While FIG. 7 depicts the processor 718 and the transceiver 720 as separate components, it will be appreciated that the processor 718 and the transceiver 720 may be integrated together in an electronic package or chip.

The transmit/receive element 722 may be configured to transmit signals to, or receive signals from, a node over the air interface 715. For example, in one embodiment, the transmit/receive element 722 may be an antenna configured to transmit and/or receive RF signals. In another embodiment, the transmit/receive element 722 may be an emitter/detector configured to transmit and/or receive IR, UV, or visible-light signals, as examples. In yet another embodiment, the transmit/receive element 722 may be configured to transmit and receive both RF and light signals. It will be appreciated that the transmit/receive element 722 may be configured to transmit and/or receive any combination of wireless signals.

In addition, although the transmit/receive element 722 is depicted in FIG. 7 as a single element, the WTRU 702 may include any number of transmit/receive elements 722. More specifically, the WTRU 702 may employ MIMO technology. Thus, in one embodiment, the WTRU 702 may include two or more transmit/receive elements 722 (e.g., multiple antennas) for transmitting and receiving wireless signals over the air interface 715.

The transceiver 720 may be configured to modulate the signals that are to be transmitted by the transmit/receive element 722 and to demodulate the signals that are received by the transmit/receive element 722. As noted above, the WTRU 702 may have multi-mode capabilities. Thus, the transceiver 720 may include multiple transceivers for enabling the WTRU 702 to communicate via multiple RATs, such as UTRA and IEEE 802.11, as examples.

The processor 718 of the WTRU 102 may be coupled to, and may receive user input data from, the audio transducers 724, the keypad 726, and/or the display/touchpad 728 (e.g., a liquid crystal display (LCD) display unit or organic light-emitting diode (OLED) display unit). The processor 718 may also output user data to the speaker/microphone 724, the keypad 726, and/or the display/touchpad 728. In addition, the processor 718 may access information from, and store data in, any type of suitable memory, such as the non-removable memory 730 and/or the removable memory 732. The non-removable memory 730 may include random-access memory (RAM), read-only memory (ROM), a hard disk, or any other type of memory storage device. The removable memory 732 may include a subscriber identity module (SIM) card, a memory stick, a secure digital (SD) memory card, and the like. In other embodiments, the processor 718 may access information from, and store data in, memory that is not physically located on the WTRU 702, such as on a server or a home computer (not shown).

The processor 718 may receive power from the power source 734, and may be configured to distribute and/or control the power to the other components in the WTRU 702. The power source 734 may be any suitable device for powering the WTRU 702. As examples, the power source 734 may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

The processor 718 may also be coupled to the GPS chipset 736, which may be configured to provide location information (e.g., longitude and latitude) regarding the current location of the WTRU 702. In addition to, or in lieu of, the information from the GPS chipset 736, the WTRU 702 may receive location information over the air interface 715 from a base station and/or determine its location based on the timing of the signals being received from two or more nearby base stations. It will be appreciated that the WTRU 702 may acquire location information by way of any suitable location-determination method while remaining consistent with an embodiment.

The processor 718 may further be coupled to other peripherals 738, which may include one or more software and/or hardware modules that provide additional features, functionality and/or wired or wireless connectivity. For example, the peripherals 738 may include an accelerometer, an e-compass, a satellite transceiver, a digital camera (for photographs or video), a universal serial bus (USB) port, a vibration device, a television transceiver, a hands-free headset, a Bluetooth® module, a frequency modulated (FM) radio unit, a digital music player, a media player, a video game player module, an Internet browser, and the like.

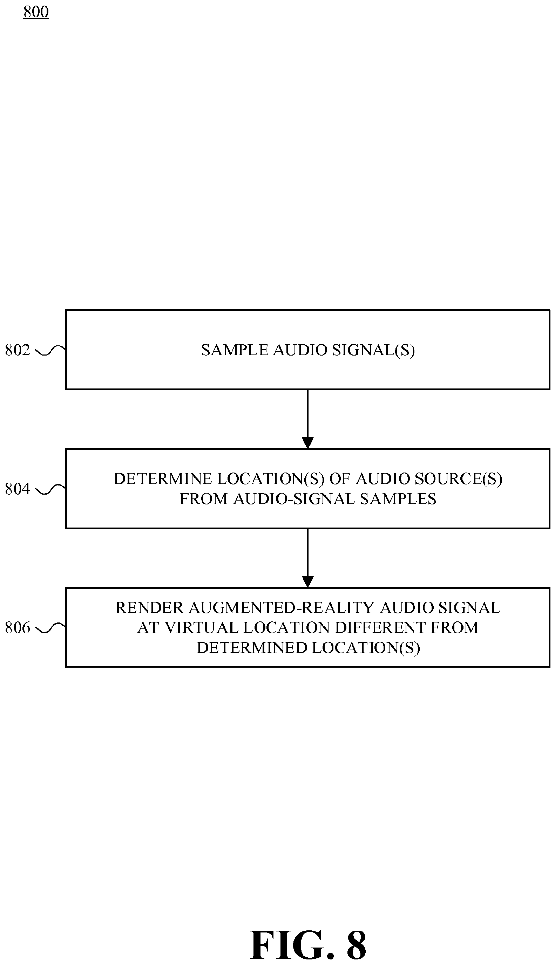

FIG. 8 is a flow diagram illustrating a first method, in accordance with at least one embodiment. The example method 800 is described herein by way of example as being carried out by an augmented-reality headset.

At step 802, the headset samples an audio signal from a plurality of microphones. In at least one embodiment, the sampled audio signal is not a test signal.

At step 804, the headset determines a respective location of at least one audio source from the sampled audio signal. In at least one embodiment, the location determination is performed using binaural cue coding. In at least one embodiment, the location determination is performed by analyzing a sub-band in the frequency domain. In at least one embodiment, the location determination is performed using inter-channel time difference.

At step 806, the headset renders an augmented-reality audio signal having a virtual location separated from the at least one determined location by at least a threshold separation. In at least one embodiment, rendering includes applying a head-related transfer function filtering. In at least one embodiment, the determined location is an angular position, and the threshold separation is a threshold angular distance; in at least one such embodiment, the threshold angular distance has a value selected from the group consisting of 5 degrees and 10 degrees.

In at least one embodiment, the at least one audio source includes multiple audio sources, and the virtual location is separated from each of the respective determined locations by at least the threshold separation.

In at least one embodiment, the method further includes distinguishing among the multiple audio sources based on one or more statistical properties selected from the group consisting of the range of harmonic frequencies, sound level, and coherence.

In at least one embodiment, each of the multiple audio sources contributes a respective audio component to the sampled audio signal, and the method further includes determining that each of the audio components has a respective coherence level that is above a predetermined coherence-level threshold.

In at least one embodiment, the method further includes identifying each of the multiple audio sources using a Gaussian mixture model. In at least one embodiment, the method further includes identifying each of the multiple audio sources at least in part by determining a probability density function of direction of arrival data. In at least one embodiment, the method further includes identifying each of the multiple audio sources at least in part by modeling a probability density function of direction of arrival data as a sum of probability distribution functions of the multiple audio sources.

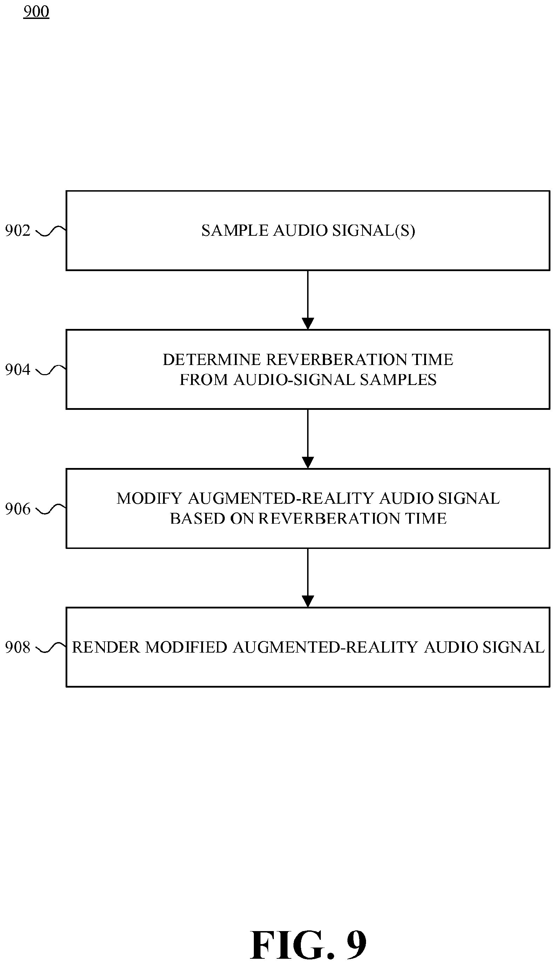

FIG. 9 is a flow diagram illustrating a second method, in accordance with at least one embodiment. The example method 900 of FIG. 9 is described herein by way of example as being carried out by an augmented-reality headset.

At step 902, the headset samples at least one audio signal from a plurality of microphones.

At step 904, the headset determines a reverberation time based on the sampled at least one audio signal.

At step 906, the headset modifies an augmented-reality audio signal based at least in part on the determined reverberation time. In at least one embodiment, step 906 involves applying to the augmented-reality audio signal a reverberation corresponding to the determined reverberation time. In at least one embodiment, step 906 involves applying to the augmented-reality audio signal a reverberation filter corresponding to the determined reverberation time. In at least one embodiment, step 906 involves slowing down (i.e., increasing the playout time used for) the augmented-reality audio signal by an amount determined based at least in part on the determined reverberation time. Slowing down the audio signal may make the audio signal more readily understood by the user in an environment in which reverberation is significant.

At step 908, the headset renders the modified augmented-reality audio signal.

**Additional Embodiments**

One embodiment takes the form of a method of determining an audio context. The method includes (i) sampling an audio signal from a plurality of microphones; and (ii) determining a location of at least one audio source from the sampled audio signal.

In at least one such embodiment, the method further includes rendering an augmented-reality audio signal having a virtual location separated from the location of the at least one audio source.

In at least one such embodiment, the method further includes rendering an augmented-reality audio signal having a virtual location separated from the location of the at least one audio source, and rendering includes applying a head-related transfer function filtering.

In at least one such embodiment, the method further includes rendering an augmented-reality audio signal having a virtual location with a separation of at least 5 degrees in the horizontal plane from the location of the audio source.

In at least one such embodiment, the method further includes rendering an augmented-reality audio signal having a virtual location with a separation of at least 10 degrees in the horizontal plane from the location of the audio source.

In at least one such embodiment, the method further includes (i) determining the location of a plurality of audio sources from the sampled audio signal and (ii) rendering an augmented-reality audio signal having a virtual location different from the locations of all of the plurality of audio sources.

In at least one such embodiment, the method further includes (i) determining the location of a plurality of audio sources from the sampled audio signal, each of the audio sources contributing a respective audio component to the sampled audio signal; (ii) determining a coherence level of each of the respective audio components; (iii) identifying one or more coherent audio sources associated with a coherence level above a predetermined threshold; and (iv) rendering an augmented-reality audio signal at a virtual location different from the locations of the one or more coherent audio sources.

In at least one such embodiment, the sampled audio signal is not a test signal.

In at least one such embodiment, the location determination is performed using binaural cue coding.

In at least one such embodiment, the location determination is performed by analyzing a sub-band in the frequency domain.

In at least one such embodiment, the location determination is performed using inter-channel time difference.

One embodiment takes the form of a method of determining an audio context. The method includes (i) sampling an audio signal from a plurality of microphones; (ii) identifying a plurality of audio sources, each source contributing a respective audio component to the sampled audio signal; and (iii) determining a location of at least one audio source from the sampled audio signal.

In at least one such embodiment, the identification of audio sources is performed using a Gaussian mixture model.

In at least one such embodiment, the identification of audio sources includes determining a probability density function of direction of arrival data.

In at least one such embodiment, the method further includes tracking the plurality of audio sources.

In at least one such embodiment, the identification of audio sources is performed by modeling a probability density function of direction of arrival data as a sum of probability distribution functions of the plurality of audio sources.

In at least one such embodiment, the method further includes distinguishing different audio sources based on statistical properties selected from the group consisting of the range of harmonic frequencies, sound level, and coherence.

One embodiment takes the form of a method of determining an audio context. The method includes (i) sampling an audio signal from a plurality of microphones; and (ii) determining a reverberation time based on the sampled audio signal.

In at least one such embodiment, the sampled audio signal is not a test signal.

In at least one such embodiment, the determination of reverberation time is performed using a plurality of overlapping sample windows.

In at least one such embodiment, the determination of reverberation time is performed using maximum likelihood estimation.

In at least one such embodiment, a plurality of audio signals are sampled, and the determination of the reverberation time includes: (i) determining an inter-channel coherence parameter for each of the plurality of sampled audio signals; and (ii) determining the reverberation time based only on signals having an inter-channel coherence parameter below a predetermined threshold.

In at least one such embodiment, a plurality of audio signals are sampled, and the determination of the reverberation time includes: (i) for each of the plurality of sampled audio signals, determining a candidate reverberation time; and (ii) determining the reverberation time based only on signals having a candidate reverberation time below a predetermined threshold.

In at least one such embodiment, the determination of the reverberation time includes: (i) identifying a plurality of audio sources from the sampled audio signal, each audio source contributing an associated audio component to the sampled audio signal; (ii) determining, from the associated audio component, an angular velocity of each of the plurality of audio sources; and (iii) determining the reverberation time based only on audio components associated with audio sources having an angular velocity below a threshold angular velocity.

In at least one such embodiment, the determination of the reverberation time includes: (i) identifying a plurality of audio sources from the sampled audio signal, each audio source contributing an associated audio component to the sampled audio signal; (ii) using the Doppler effect to determine a radial velocity of each of the plurality of audio sources; and (iii) determining the reverberation time based only on audio components associated with audio sources having a radial velocity below a threshold radial velocity.

In at least one such embodiment, the determination of the reverberation time includes: (i) identifying a plurality of audio sources from the sampled audio signal, each audio source contributing an associated audio component to the sampled audio signal; and (ii) determining the reverberation time based only on substantially stationary audio sources.

In at least one such embodiment, the method further includes rendering an augmented-reality audio signal having a reverberation corresponding to the determined reverberation time.

One embodiment takes the form of a method of determining an audio context. The method includes (i) sampling an audio signal from a plurality of microphones; (ii) identifying a plurality of audio sources from the sampled audio signal; (iii) identifying a component of the sampled audio signal attributable to a stationary audio source; and (iv) determining a reverberation time based at least in part on the component of the sampled audio signal attributable to the stationary audio source.

In at least one such embodiment, the identification of a component attributable to a stationary audio source is performed using binaural cue coding.

In at least one such embodiment, the identification of a component attributable to a stationary audio source is performed by analyzing a sub-band in the frequency domain.

In at least one such embodiment, the identification of a component attributable to a stationary audio source is performed using inter-channel time difference.

One embodiment takes the form of a system that includes (i) a plurality of microphones; (ii) a plurality of speakers; (iii) a processor; and (iv) a non-transitory computer-readable medium having instructions stored thereon, the instructions being operative, when executed by the processor, to (a) obtain a multi-channel audio sample from the plurality of microphones; (b) identify, from the multi-channel audio sample, a plurality of audio sources, each source contributing a respective audio component to the multi-channel audio sample; (c) determine a location of each of the audio sources; and (d) render an augmented-reality audio signal through the plurality of speakers.

In at least one such embodiment, the instructions are further operative to render the augmented-reality audio signal at a virtual location different from the locations of the plurality of audio sources.

In at least one such embodiment, the instructions are further operative to determine a reverberation time from the multi-channel audio sample.

In at least one such embodiment, the instructions are further operative to (a) identify at least one stationary audio source from the plurality of audio sources; and (b) determine a reverberation time only from the audio components associated with the stationary audio sources.

In at least one such embodiment, the speakers are earphones.

In at least one such embodiment, the system is implemented in an augmented-reality headset.

In at least one such embodiment, the instructions are operative to identify the plurality of audio sources using Gaussian mixture modelling.

In at least one such embodiment, the instructions are further operative to (a) determine a candidate reverberation time for each of the audio components; and (b) base the reverberation time on the candidate reverberation times that are less than a predetermined threshold.

In at least one such embodiment, the system is implemented in a mobile telephone.

In at least one such embodiment, the instructions are further operative to (a) to determine a reverberation time from the multi-channel audio sample; (b) apply a reverberation filter using the determined reverberation time to an augmented-reality audio signal; and (c) render the filtered augmented-reality audio signal through the plurality of speakers.

One embodiment takes the form of a method that includes (i) sampling a plurality of audio signals on at least two channels; (ii) determining an inter-channel coherence value for each of the audio signals; (iii) identifying at least one of the audio signals having an inter-channel coherence value below a predetermined threshold value; and (iv) determining a reverberation time from the at least one audio signal having an inter-channel coherence value below the predetermined threshold value.

In at least one such embodiment, the method further includes generating an augmented-reality audio signal using the determined reverberation time.

One embodiment takes the form of a method that includes (i) sampling a plurality of audio signals on at least two channels; (ii) determining a value representing source movement for each of the audio signals; (iii) identifying at least one of the audio signals having a source movement value below a predetermined threshold value; and (iv) determining a reverberation time from the at least one audio signal having a source movement value below the predetermined threshold value.

In at least one such embodiment, the value representing source movement is an angular velocity.

In at least one such embodiment, the value representing source movement is a value representing a Doppler shift.

In at least one such embodiment, the method further includes generating an augmented-reality audio signal using the determined reverberation time.

One embodiment takes the form of an augmented-reality audio system that generates information regarding the acoustic environment by sampling audio signals. Using a Gaussian mixture model or other technique, the system identifies the location of one or more audio sources, with each source contributing an audio component to the sampled audio signals. The system determines a reverberation time for the acoustic environment using the audio components. In determining the reverberation time, the system may discard audio components from sources that are determined to be in motion, such as components with an angular velocity above a threshold or components having a Doppler shift above a threshold. The system may also discard audio components from sources having an inter-channel coherence above a threshold. In at least one embodiment, the system renders sounds using the reverberation time at virtual locations that are separated from the locations of the audio sources.

## Conclusion

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read-only memory (ROM), a random-access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## ITEMIZED EMBODIMENTS THAT ARE PART OF THE DESCRIPTION

1. A method comprising:

sampling an audio signal from a plurality of microphones;

determining a respective location of at least one audio source from the sampled audio signal; and

rendering an augmented-reality audio signal having a virtual location separated from the at least one determined location by at least a threshold separation.

2. The method of item 1, carried out by an augmented-reality headset.

3. The method of item 1, wherein rendering comprises applying a head-related transfer function filtering.

4. The method of item 1, wherein the determined location is an angular position, and wherein the threshold separation is a threshold angular distance.

5. The method of item 4, wherein the threshold angular distance has a value selected from the group consisting of 5 degrees and 10 degrees.

6. The method of item 1, wherein the at least one audio source comprises multiple audio sources, and wherein the virtual location is separated from each of the respective determined locations by at least the threshold separation.

7. The method of item 6, further comprising distinguishing among the multiple audio sources based on one or more statistical properties selected from the group consisting of the range of harmonic frequencies, sound level, and coherence.

8. The method of item 6, wherein each of the multiple audio sources contributes a respective audio component to the sampled audio signal, the method further comprising:

determining that each of the audio components has a respective coherence level that is above a predetermined coherence-level threshold.

9. The method of item 6, further comprising identifying each of the multiple audio sources using a Gaussian mixture model.

10. The method of item 6, further comprising identifying each of the multiple audio sources at least in part by determining a probability density function of direction of arrival data.

11. The method of item 6, further comprising identifying each of the multiple audio sources at least in part by modeling a probability density function of direction of arrival data as a sum of probability distribution functions of the multiple audio sources.

12. The method of item 1, wherein the sampled audio signal is not a test signal.

13. The method of item 1, wherein the location determination is performed using binaural cue coding.

14. The method of item 1, wherein the location determination is performed by analyzing a sub-band in the frequency domain.

15. The method of item 1, wherein the location determination is performed using inter-channel time difference.

16. An augmented-reality headset comprising:

a plurality of microphones;

at least one audio-output device;

a processor; and

data storage containing instructions executable by the processor for causing the augmented-reality headset to carry out a set of functions, the set of functions including:

sampling an audio signal from the plurality of microphones;

determining a respective location of at least one audio source from the sampled audio signal;

rendering, via the at least one audio-output device, an augmented-reality audio signal having a virtual location separated from the at least one determined location by at least a threshold separation.

17. A method comprising:

sampling at least one audio signal from a plurality of microphones;
determining a reverberation time based on the sampled at least one audio signal;
modifying an augmented-reality audio signal based at least in part on the determined reverberation time; and
rendering the modified augmented-reality audio signal.

18. The method of item 17, wherein modifying the augmented-reality audio signal based at least in part on the determined reverberation time comprises applying to the augmented-reality audio signal a reverberation corresponding to the determined reverberation time.

19. The method of item 17, wherein modifying the augmented-reality audio signal based at least in part on the determined reverberation time comprises applying to the augmented-reality audio signal a reverberation filter corresponding to the determined reverberation time.

20. The method of item 17, wherein modifying the augmented-reality audio signal based at least in part on the determined reverberation time comprises slowing down the augmented-reality audio signal by an amount determined based at least in part on the determined reverberation time.

**Claims**

1. A method comprising:

sampling at least one audio signal from a plurality of microphones;
determining a reverberation time based on the sampled at least one audio signal;
modifying an augmented-reality audio signal based at least in part on the determined reverberation time; and
rendering the modified augmented-reality audio signal.

2. The method of claim 1, wherein modifying the augmented-reality audio signal based at least in part on the determined reverberation time comprises applying to the augmented-reality audio signal a reverberation corresponding to the determined reverberation time.

3. The method of claim 1, wherein modifying the augmented-reality audio signal based at least in part on the determined reverberation time comprises applying to the augmented-reality audio signal a reverberation filter corresponding to the determined reverberation time.

4. The method of claim 1, wherein modifying the augmented-reality audio signal based at least in part on the determined reverberation time comprises slowing down the augmented-reality audio signal by an amount determined based at least in part on the determined reverberation time.

5. The method of claim 1, wherein determining a reverberation time comprises determining a decaying factor.

6. The method of claim 1, wherein determining a reverberation time comprises selecting a reverberation time from among a set of quantized reverberation time candidates.

7. The method of claim 1, carried out by an augmented-reality headset.

8. The method of claim 1, wherein the sampled audio signal is not a test signal.

9. The method of claim 1, wherein the determination of reverberation time is performed using maximum likelihood estimation.

10. The method of claim 1, wherein a plurality of audio signals are sampled, and wherein the determination of the reverberation time includes:

determining an inter-channel coherence parameter for each of the plurality of sampled audio signals; and determining the reverberation time based only on signals having an inter-channel coherence parameter below a predetermined threshold.

11. The method of claim 1, wherein a plurality of audio signals are sampled, and wherein the determination of the reverberation time includes:

for each of the plurality of sampled audio signals, determining a candidate reverberation time; and determining the reverberation time based only on signals having a candidate reverberation time below a predetermined threshold.

12. The method of claim 1, wherein the determination of the reverberation time includes:

identifying a plurality of audio sources from the sampled audio signal, each audio source contributing an associated audio component to the sampled audio signal;
determining, from the associated audio component, an angular velocity of each of the plurality of audio sources; and
determining the reverberation time based only on audio components associated with audio sources having an angular velocity below the threshold angular velocity.

13. The method of claim 1, wherein the determination of the reverberation time includes:

identifying a plurality of audio sources from the sampled audio signal, each audio source contributing an associated audio component to the sampled audio signal;
using the Doppler effect to determine a radial velocity of each of the plurality of audio sources; and
determining the reverberation time based only on audio components associated with audio sources having a radial velocity below the threshold radial velocity.

14. The method of claim 1, wherein the determination of the reverberation time includes:

identifying a plurality of audio sources from the sampled audio signal, each audio source contributing an associated audio component to the sampled audio signal; and
determining the reverberation time based only on substantially stationary audio sources.

15. An augmented-reality headset comprising:

a plurality of microphones;
at least one audio-output device;
a processor; and
data storage containing instructions executable by the processor for causing the augmented-reality headset to carry out a set of functions, the set of functions including:

sampling at least one audio signal from the plurality of microphones;
determining a reverberation time based on the sampled at least one audio signal;
modifying an augmented-reality audio signal based at least in part on the determined reverberation time; and
rendering the modified augmented-reality audio signal on the audio output device.

FIG. 1

**FIG. 2**

**FIG. 3**

EP 3 441 966 A1

400

AUGMENTED SOUND SOURCE AND LOCATION INFORMATION

| | | |
|---|---|---|
| 402 | API | |
| 404 | RENDERING | |
| 406 | CONTEXT REFINEMENT | MIXER — 410 |
| 408 | CONTEXT ANALYSIS | PLAYBACK — 412 |

MICROPHONES                    LOUDSPEAKERS

# FIG. 4

500

MICROPHONE
INPUT

SOUND SOURCE
LOCATION
AND
COHERENCE
ESTIMATION

502

510

LOCATION
AND
COHERENCE
CUES

SOUND SOURCE
MOTION
AND
SPEED
ESTIMATION

504

512

SOUND
SOURCE
MOTION
CUES

REVERBERATION
ESTIMATION

506

514

REVERBERATION
CUES

CONTEXT
REFINEMENT

508

RELIABLE AUDIO
IMAGE CONTEXT

# FIG. 5

600

AUGMENTED
AUDIO SOURCES

LOCATION,
COHERENCE
AND
REVERBERATION
CUES OF
NATURAL
SOURCES

602

AUGMENTED
SOURCE
LOCATION
REFINEMENT

DESIRED
LOCATION
FOR THE
AUGMENTED
SOURCES

604

AUGMENTED
SOURCE
RENDERING

REVERBERATION
CUE OF THE
ENVIRONMENT

606

REVERBERATION
SYNTHESIS

608

AUDIO MIXER
AND PLAYBACK

AUGMENTED-REALITY
DEVICE

# FIG. 6

**FIG. 7**

800

```
802 ─┐    ┌─────────────────────────────────────────────────┐
      │    │                                                 │
      └────┤              SAMPLE AUDIO SIGNAL(S)             │
           │                                                 │
           └─────────────────────────────────────────────────┘
                                  │
                                  ▼
804 ─┐    ┌─────────────────────────────────────────────────┐
      │    │      DETERMINE LOCATION(S) OF AUDIO SOURCE(S)   │
      └────┤          FROM AUDIO-SIGNAL SAMPLES             │
           │                                                 │
           └─────────────────────────────────────────────────┘
                                  │
                                  ▼
806 ─┐    ┌─────────────────────────────────────────────────┐
      │    │     RENDER AUGMENTED-REALITY AUDIO SIGNAL       │
      └────┤      AT VIRTUAL LOCATION DIFFERENT FROM         │
           │          DETERMINED LOCATION(S)                 │
           └─────────────────────────────────────────────────┘
```

# FIG. 8

900

| SAMPLE AUDIO SIGNAL(S) |
|---|

902

| DETERMINE REVERBERATION TIME FROM AUDIO-SIGNAL SAMPLES |
|---|

904

| MODIFY AUGMENTED-REALITY AUDIO SIGNAL BASED ON REVERBERATION TIME |
|---|

906

| RENDER MODIFIED AUGMENTED-REALITY AUDIO SIGNAL |
|---|

908

# FIG. 9

Europäisches
Patentamt

European
Patent Office

Office européen
des brevets

# EUROPEAN SEARCH REPORT

Application Number

EP 18 19 6817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 337 375 A1 (NXP BV [NL]) 22 June 2011 (2011-06-22) | 1-3,6-8, 12-15 | INV. G10L19/008 |
| Y | * paragraphs [0004], [0021] - [0023], [0036]; figure 1 * | 4,5,9-11 | H04S7/00 G10L21/043 H04R5/033 |
| Y | US 2004/196989 A1 (FRIEDMAN SOL [US] ET AL) 7 October 2004 (2004-10-07) * paragraph [0010] * | 4 | G10L21/0216 A63F13/215 A63F13/54 |
| Y | JIMI Y C WEN ET AL: "Blind estimation of reverberation time based on the distribution of signal decay rates", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 329-332, XP031250555, ISBN: 978-1-4244-1483-3 * abstract * | 5 | |
| Y | US 2004/213415 A1 (RAMA RATNAM [US] ET AL) 28 October 2004 (2004-10-28) * paragraph [0010] * | 9 | **TECHNICAL FIELDS SEARCHED (IPC)** G10L |
| Y | WESTERMANN ADAM ET AL: "Binaural dereverberation based on interaural coherence histograms", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 133, no. 5, 1 May 2013 (2013-05-01), pages 2767-2777, XP012173352, ISSN: 0001-4966, DOI: 10.1121/1.4799007 [retrieved on 2013-05-06] * chapter "A. Signal processing" (p.2) * | 10,11 | |

The present search report has been drawn up for all claims

| Place of search | Date of completion of the search | Examiner |
|---|---|---|
| Munich | 22 October 2018 | Heiner, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 19 6817

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2018

| Patent document cited in search report | | Publication date | Patent family member(s) | | Publication date |
|---|---|---|---|---|---|
| EP 2337375 | A1 | 22-06-2011 | CN<br>EP<br>US | 102164336 A<br>2337375 A1<br>2011150248 A1 | 24-08-2011<br>22-06-2011<br>23-06-2011 |
| US 2004196989 | A1 | 07-10-2004 | NONE | | |
| US 2004213415 | A1 | 28-10-2004 | US<br>WO | 2004213415 A1<br>2004097351 A2 | 28-10-2004<br>11-11-2004 |

EPO FORM P0459

For more details about this annex : see Official Journal of the European Patent Office, No. 12/82

**EP 3 441 966 A1**

**Patent documents cited in the description**

- US 62028121 A